(19) Europäisches Patentamt
European Patent Office
Office européen des brevets

(11) EP 2 966 098 B1

(12) **EUROPEAN PATENT SPECIFICATION**

(45) Date of publication and mention of the grant of the patent:
**12.07.2017 Bulletin 2017/28**

(21) Application number: **14759650.6**

(22) Date of filing: **07.03.2014**

(51) Int Cl.:
***C08F 8/00*** (2006.01) ***C08F 4/54*** (2006.01)
***C08F 4/606*** (2006.01) ***C08F 36/04*** (2006.01)
***C08C 19/44*** (2006.01)

(86) International application number:
**PCT/JP2014/056047**

(87) International publication number:
**WO 2014/136963 (12.09.2014 Gazette 2014/37)**

(54) **MODIFIED CONJUGATED DIENE POLYMER, METHOD FOR PRODUCING SAME, AND RUBBER COMPOSITION USING SAME**

MODIFIZIERTES KONJUGIERTES DIEN-POLYMER, VERFAHREN ZUR HERSTELLUNG DAVON UND KAUTSCHUKZUSAMMENSETZUNG DAMIT

POLYMÈRE DIÈNE CONJUGUÉ MODIFIÉ, SON PROCÉDÉ DE FABRICATION ET COMPOSITION DE CAOUTCHOUC L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2013 JP 2013046112**
**08.03.2013 JP 2013046115**
**08.03.2013 JP 2013046118**

(43) Date of publication of application:
**13.01.2016 Bulletin 2016/02**

(73) Proprietor: **UBE Industries, Ltd.**
**Yamaguchi 755-8633 (JP)**

(72) Inventors:
- **SUZUKI, Michinori**
**Ichihara-shi**
**Chiba 290-0045 (JP)**
- **TAKAHASHI, Yuuki**
**Ichihara-shi**
**Chiba 290-0045 (JP)**
- **MURAKAMI, Masato**
**Ichihara-shi**
**Chiba 290-0045 (JP)**
- **KIMURA, Masanobu**
**Ichihara-shi**
**Chiba 290-0045 (JP)**
- **OKAMOTO, Naomi**
**Ichihara-shi**
**Chiba 290-0045 (JP)**
- **KANOU Yuuto**
**Ichihara-shi**
**Chiba 290-0045 (JP)**

(74) Representative: **Grünecker Patent- und Rechtsanwälte**
**PartG mbB**
**Leopoldstraße 4**
**80802 München (DE)**

(56) References cited:
**EP-A1- 1 816 145** **EP-A1- 2 253 664**
**WO-A1-95/04090** **WO-A1-2006/049016**
**WO-A1-2009/113548** **JP-A- S58 162 604**
**JP-A- 2007 161 798** **JP-A- 2009 215 429**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 966 098 B1

## Description

### Technical Field

The present invention relates to a modified conjugated diene polymer obtained by polymerizing a conjugated diene compound using a polymerization catalyst including an yttrium compound having a bulky ligand and then modifying the conjugated diene polymer with a carbonyl compound, a method for producing the same, and a rubber composition using the same.

### Background Art

Conventionally, as automobile tire rubber, a rubber composition mainly including polybutadiene rubber (BR) or styrene-butadiene rubber (SBR), and containing other natural rubber or the like is used.

Recently, a request for low fuel consumption and a request for traveling safety on snow and ice of automobile are increased, thus as automobile tire tread rubber, the development of rubber material with low rolling resistance (namely, with high impact resilience), and high road surface grip (namely, high wet skid resistance) on snow and ice is desired for. However, there have been problems that high resilient rubber such as polybutadiene rubber (BR) tends to have low wet skid resistance, while styrene-butadiene rubber (SBR) has high wet skid resistance and also high rolling resistance.

As a method for solving the above problems, many methods of chemically modifying a low cis-diene rubber with a modifying agent in the presence of a lithium catalyst are proposed. For example, Patent Literatures 1 and 2 suggest a method for modifying low cis-BR with a benzophenone compound, and report that rolling resistance of automobile tire is small, wet skid resistance is high, and impact resilience is also improved.

However, low cis-BR is insufficient in abrasion resistance, and this problem is not still solved by modification. Also, SBR has low impact resilience, and this defect is not sufficiently resolved even after modification.

As a method for producing a conjugated diene polymer having a high cis-1,4-structure, a combination of a compound such as titanium, cobalt, nickel or neodymium and an organic aluminum compound is often used.

Also, as a catalyst containing an yttrium compound for producing a conjugated diene polymer with very high cis-1,4-structure content, Patent Literature 3 discloses a catalyst system containing an yttrium compound having a bulky substituent or an yttrium compound having bis(trimethylsilyl)amide as a ligand. The cis-1,4-structure content of the conjugated diene polymer obtained in these catalyst systems is 99% or more, but the reaction with a modifying agent has not been known at all.

Patent Literatures 4 to 6 disclose a method of producing cis-1,4-polybutadiene using compound containing a rare-earth element corresponding to atomic numbers 57 to 71 in the periodic table as a catalyst, then modifying it by reacting with an amine compound, an imide compound, a quinone compound, a thiazole compound, a sulfenamide compound or the like. However, a specific example using an yttrium catalyst is not shown, and an example of a method of polymerizing 1,3-butadiene is limited to use of a neodymium catalyst.

Patent Literature 7 discloses a method of producing cis-1,4-polybutadiene using a titanium compound having a cyclopentadienyl skeleton as a catalyst, and then modifying it by reacting with 4,4'-bis(diethylamino)benzophenone. However, the ratio of the weight-average molecular weight (Mw) to the number-average molecular weight (Mn) (Mw/Mn) is very small as less than 1.5, thus there is problem in processability.

Patent Literature 1: JP 58-162604 A
Patent Literature 2: JP 59-117514 A
Patent Literature 3: WO 2010/074255 A
Patent Literature 4: JP 2001-139633 A
Patent Literature 5: JP 2001-139634 A
Patent Literature 6: JP 2002-30110 A
Patent Literature 7: JP 2000-86719 A

### Summary of Invention

### Technical Problem

An object of the present invention is to provide a modified conjugated diene polymer that is excellent in processability and impact resilience, has markedly improved abrasion resistance and crack growth resistance, is excellent in low heat generation properties, and has low energy loss, a method for producing the same, and a rubber composition

using the same.

Solution to Problem

In order to achieve the above objects, the present invention provides a modified conjugated diene polymer obtained by a method comprising: polymerizing a conjugated diene compound using a catalyst including (A) an yttrium compound having a bulky ligand represented by the following general formula (1), (B) an ionic compound formed of a non-coordinating anion and a cation, and (C) an organic metal compound of an element selected from the group consisting of group 2, group 12 and group 13 of the periodic table to obtain a conjugated diene polymer; and modifying the conjugated diene polymer with a carbonyl compound.

[Chemical Formula 1]

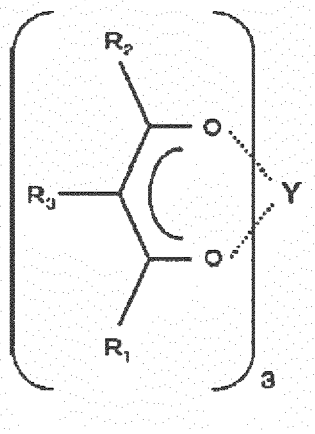

(1)

wherein $R_1$, $R_2$ and $R_3$ represent hydrogen or a hydrocarbon group having 1 to 12 of carbon atom, O represents an oxygen atom, and Y represents an yttrium atom.

In the modified conjugated diene polymer of the present invention, the carbonyl compound is preferably at least one selected from the group consisting of carbonyl compounds having an amino group and carbonyl compounds having an alkoxy group, and the carbonyl compound is more preferably
4,4'-bisdialkylaminobenzophenone or
4,4'-dialkoxybenzophenone.

Moreover, in the modified conjugated diene polymer of the present invention, it is preferred that, when the conjugated diene compound is polymerized, the molecular weight is adjusted by a compound selected from the group consisting of (1) hydrogen, (2) metal hydride compounds and (3) organic metal hydride compounds.

Further, in the modified conjugated diene polymer of the present invention, it is preferred that the conjugated diene polymer is cis-1,4-polybutadiene having 99% or more of cis-1,4-structure, and has a ratio of the weight-average molecular weight (Mw) to the number-average molecular weight (Mn) (Mw/Mn) of 1.5 or more and less than 3.

Furthermore, in the modified conjugated diene polymer of the present invention, it is preferred that the conjugated diene polymer is polybutadiene showing a melting point (Tm) of -5°C or more, measured by differential scanning calorimetry (DSC).

In addition, according to the present invention, there is provided a rubber composition using the modified conjugated diene polymer.

In the present invention, the rubber composition preferably contains the modified conjugated diene polymer, a diene polymer other than the modified conjugated diene polymer, and a rubber reinforcing agent, and preferably contains silica as a rubber reinforcing agent.

Also, according to the present invention, there is provided a method for producing a modified conjugated diene polymer, which includes: polymerizing a conjugated diene compound using a catalyst containing (A) an yttrium compound having a bulky ligand represented by the following general formula (1), (B) an ionic compound formed of a non-coordinating anion and a cation, and (C) an organic metal compound of an element selected from the group consisting of group 2, group 12 and group 13 of the periodic table to obtain a conjugated diene polymer; and modifying the conjugated diene polymer with a carbonyl compound.

[Chemical Formula 2]

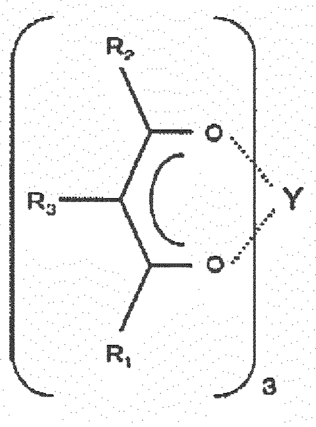

(1)

wherein $R_1$, $R_2$ and $R_3$ represent hydrogen or a hydrocarbon group having 1 to 12 of carbon atom, O represents an oxygen atom, and Y represents an yttrium atom.

In the method for producing a modified conjugated diene polymer of the present invention, the carbonyl compound is preferably at least one selected from the group consisting of carbonyl compounds having an amino group and carbonyl compounds having an alkoxy group, and the carbonyl compound is more preferably 4,4'-bisdialkylaminobenzophenone or 4,4'-dialkoxybenzophenone.

Moreover, in the method for producing a modified conjugated diene polymer of the present invention, it is preferred that, when the conjugated diene compound is polymerized, the molecular weight is adjusted by a compound selected from the group consisting of (1) hydrogen, (2) metal hydride compounds and (3) organic metal hydride compounds.

Advantageous Effects of Invention

As described above, according to the present invention, there can be provided a modified conjugated diene polymer with very high cis-1,4-structure content using a relatively easily handleable and highly active catalyst and a method for producing the same, and there can be provided a rubber composition that has improved dispersibility of the filler and has excellent abrasion resistance and crack growth resistance. More specifically, there can be provided a modified conjugated diene polymer that is excellent in processability and impact resilience, has markedly improved abrasion resistance and crack growth resistance, is excellent in low heat generation properties, and has low energy loss, a method for producing the same, and a rubber composition using the same.

Brief Description of Drawings

Fig. 1 is a graph showing a relationship between UV/RI and $(1/Mn) \times 10^4$, for determining a modification degree of the modified conjugated diene polymer of the present invention, modified with a carbonyl compound having an amino group. Here, UV represents a peak area value determined by UV absorbance at 274 nm obtained by GPC measurement of the polymer, and RI represents a peak area value obtained by differential refractive index. In addition, Mn represents a number-average molecular weight.

Fig. 2 is a graph showing a relationship between UV/RI and $(1/Mn) \times 10^4$, for determining a modification degree of the modified conjugated diene polymer of the present invention, modified with a carbonyl compound having an alkoxy group. Here, UV represents a peak area value determined by UV absorbance at 238 nm obtained by GPC measurement of the polymer, and RI represents a peak area value obtained by differential refractive index. In addition, Mn represents a number-average molecular weight.

Description of Embodiments

The yttrium compound which is component (A) of the catalyst system of the present invention is an yttrium compound having a bulky ligand represented by the following general formula (1).

[Chemical Formula 3]

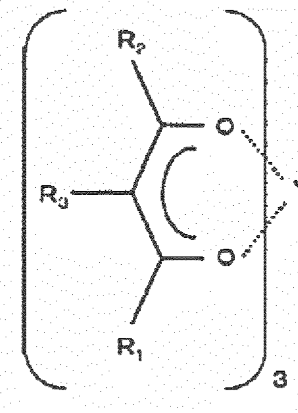

(1)

wherein $R_1$, $R_2$ and $R_3$ represent hydrogen or a hydrocarbon group having 1 to 12 of carbon atom, O represents an oxygen atom, and Y represents an yttrium atom.

Specific examples of $R_1$, $R_2$ and $R_3$ include hydrogen, a methyl group, an ethyl group, a vinyl group, an n-propyl group, an isopropyl group, a 1-propenyl group, an allyl group, an n-butyl group, an s-butyl group, an isobutyl group, a t-butyl group, an n-pentyl group, a 1-methylbutyl group, a 2-methylbutyl group, a 3-methylbutyl group, a 1,1-dimethylpropyl group, a 1,2-dimethylpropyl group, a 2,2-dimethylpropyl group, a hexyl group, a heptyl group, an octyl group, a nonyl group, a decyl group, an undecyl group, a dodecyl group, a cyclohexyl group, a methylcyclohexyl group, an ethylcyclohexyl group, a phenyl group, a benzyl group, a toluyl group, a phenethyl group, and the like. Furthermore, examples also include the above examples substituted by a hydroxyl group, a carboxyl group, a carbomethoxyl group, a carboethoxyl group, an amide group, an amino group, an alkoxy group, a phenoxy group or the like, at an arbitrary position.

As the yttrium compound which is component (A) of the catalyst system of the present invention, a salt or complex of yttrium is preferably used. Particularly preferred examples include yttrium compounds such as tris(acetylacetonato)yttrium, tris(hexanedionato)yttrium, tris(heptanedionato)yttrium, tris(methylheptanedionato)yttrium, tris(dimethylheptanedionato)yttrium, tris(trimethylheptanedionato)yttrium, tris(tetramethylheptanedionato)yttrium, tris(pentamethylheptanedionato)yttrium, tris(hexamethylheptanedionato)yttrium, and tris acetoacetato yttrium.

In an ionic compound which is component (B) of the catalyst system of the present invention and formed of a non-coordinating anion and a cation, examples of the non-coordinating anion include tetra(phenyl)borate, tetra(fluorophenyl)borate, tetrakis(difluorophenyl)borate, tetrakis(trifluorophenyl)borate, tetrakis(tetrafluorophenyl)borate, tetrakis(pentafluorophenyl)borate, tetrakis(3,5-bistrifluoromethylphenyl)borate, tetrakis(tetrafluoromethylphenyl)borate, tetra(toluyl)borate, tetra(xylyl)borate, triphenyl(pentafluorophenyl)borate, tris(pentafluorophenyl)(phenyl)borate, tridecahydride-7,8-dicarbaundecaborate, tetrafluoroborate, hexafluorophosphate, and the like.

On the other hand, examples of the cation include carbonium cation, oxonium cation, ammonium cation, phosphonium cation, cycloheptatrienyl cation, ferrocenium cation, and the like.

Specific examples of the carbonium cation include tri-substituted carbonium cations such as triphenyl carbonium cations and tri-substituted phenylcarbonium cations, and the like. Specific examples of the tri-substituted phenylcarbonium cation include tri(methylphenyl)carbonium cation, tri(dimethylphenyl)carbonium cation, and the like.

Specific examples of the ammonium cation include trialkylammonium cations such as trimethylammonium cation, triethylammonium cation, tripropylammonium cation, tributylammonium cation and tri(n-butyl)ammonium cation; N,N-dialkylanilinium cations such as N,N-dimethylanilinium cation, N,N-diethylanilinium cation and N,N-2,4,6-pentamethylanilinium cation; and dialkylammonium cations such as di(i-propyl)ammonium cation and dicyclohexylammonium cation.

Specific examples of the phosphonium cation include aryl phosphonium cations such as triphenylphosphonium cation, tetraphenylphosphonium cation,
tri(methylphenyl)phosphonium cation,
tetra(methylphenyl)phosphonium cation,
tri(dimethylphenyl)phosphonium cation, and
tetra(dimethylphenyl)phosphonium cation.

The ionic compound can be preferably used in any combination of a non-coordinating anion and a cation that are arbitrarily respectively selected from the non-coordinating anions and cations exemplified above.

Among them, as the ionic compound, triphenyl carbonium tetrakis(pentafluorophenyl)borate, triphenyl carbonium tetrakis(fluorophenyl)borate, N,N-dimethylanilinium tetrakis(pentafluorophenyl)borate
1,1'-dimethylferrocenium
tetrakis(pentafluorophenyl)borate and the like are preferred. These ionic compounds may be used singly or two or more kinds of ionic compounds may be used in combination.

Alumoxane may be used as the component (B). Alumoxane is obtained by bringing an organoaluminum compound into contact with a condensing agent, and examples thereof include chain alumoxane and cyclic alumoxane which are represented by a general formula (-Al(R')O-)n in which R' represents a hydrocarbon group having 1 to 10 of carbon atom, including those that are partially substituted by a halogen atom and/or an alkoxy group. n represents a degree of polymerization, and is 5 or higher, or preferably 10 or higher. Specifically, R' represents a methyl group, an ethyl group, a propyl group, and an isobutyl group, and a methyl group is preferable. Examples of an organic aluminum compound used for a raw material of alumoxane include trialkyl aluminum such as trimethyl aluminum, triethyl aluminum and triisobutyl aluminum, mixtures thereof, and the like.

Among them, alumoxane which is obtained using a mixture of trimethyl aluminum and tributyl aluminum as a raw material can be preferably used.

In addition, a typical example of the condensing agent includes water, but other than this, examples thereof include an arbitrary compound with which trialkyl aluminum causes a condensation reaction, such as adsorbed water in an inorganic substance or the like, diol, and the like.

As the organic metal compound of an element selected from the group consisting of group 2, group 12 and group 13 of the periodic table which is a component (C) of the catalyst system of the present invention, for example, organic magnesium, organic zinc, organic aluminum, or the like is used. Among these compounds, dialkyl magnesium, alkyl magnesium chloride, alkyl magnesium bromide, dialkyl zinc, trialkyl aluminum, dialkyl aluminum chloride, dialkyl aluminum bromide, alkyl aluminum sesquichloride, alkyl aluminum sesquibromide, alkyl aluminum dichloride, dialkyl aluminum hydride and the like are preferred.

Specific compounds include alkyl magnesium halides such as methyl magnesium chloride, ethyl magnesium chloride, butyl magnesium chloride, hexyl magnesium chloride, octyl magnesium chloride, ethyl magnesium bromide, butyl magnesium bromide, butyl magnesium iodide and hexyl magnesium iodide.

Moreover, specific compounds include dialkyl magnesium such as dimethyl magnesium, diethyl magnesium, dibutyl magnesium, dihexyl magnesium, dioctyl magnesium, ethylbutyl magnesium, and ethylhexylmagnesium.

Further, specific compounds include dialkyl zinc such as dimethyl zinc, diethyl zinc, diisobutyl zinc, dihexyl zinc, dioctyl zinc, and didecyl zinc.

Furthermore, specific compounds include trialkyl aluminum such as trimethyl aluminum, triethyl aluminum, triisobutyl aluminum, trihexyl aluminum, trioctyl aluminum, and tridecyl aluminum.

In addition, specific compounds include dialkyl aluminum chloride such as dimethyl aluminum chloride and diethyl aluminum chloride, organic aluminum halogen compounds such as ethyl aluminum sesquichloride and ethyl aluminum dichloride, and hydrogenated organic aluminum compounds such as diethyl aluminum hydride, diisobutyl aluminum hydride, and ethyl aluminum sesquihydride.

These organic metal compounds of an element selected from the group consisting of group 2, group 12 and group 13 of the periodic table can be used singly or two or more kinds can be used together.

The conjugated diene compound can be polymerized using the above-described catalyst, and as a molecular weight controller of the conjugated diene polymer to be obtained, a compound selected from (1) hydrogen, (2) metal hydride compounds and (3) organic metal hydride compounds can be used.

Examples of the (2) metal hydride compound as the molecular weight controller in the present invention include lithium hydride, sodium hydride, potassium hydride, magnesium hydride, calcium hydride, borane, aluminum hydride, gallium hydride, silane, germane, lithium borohydride, sodium borohydride, lithium aluminum hydride, sodium aluminum hydride, and the like.

In addition, examples of the (3) organic metal hydride compounds as the molecular weight controller in the present invention include alkylborane such as methylborane, ethylborane, propylborane, butylborane and phenylborane; dialkylborane such as dimethylborane, diethylborane, dipropylborane, dibutylborane and diphenylborane; alkyl aluminum

dihydride such as methyl aluminum dihydride, ethyl aluminum dihydride, propyl aluminum dihydride, butyl aluminum dihydride and phenyl aluminum dihydride; dialkyl aluminum hydride such as dimethyl aluminum hydride, diethyl aluminum hydride, dipropyl aluminum hydride, dibutyl aluminum hydride and diphenyl aluminum hydride; silanes such as methylsilane, ethylsilane, propylsilane, butylsilane, phenylsilane, dimethylsilane, diethylsilane, dipropylsilane, dibutylsilane, diphenylsilane, trimethylsilane, triethylsilane, tripropylsilane, tributylsilane and triphenylsilane; germanes such as methylgermane, ethylgermane, propylgermane, butylgermane, phenylgermane, dimethylgermane, diethylgermane, dipropylgermane, dibutylgermane, diphenylgermane, trimethylgermane, triethylgermane, tripropylgermane, tributylgermane and triphenylgermane; and the like.

Among them, diisobutyl aluminum hydride and diethyl aluminum hydride are preferred, and diethyl aluminum hydride is particularly preferred.

The order of addition of the catalyst components is not particularly limited, and, for example, can be added in the following order.

(1) To add the component (C) to an inert organic solvent, in the presence or absence of the conjugated diene compound monomer to be polymerized, and then add the component (A) and the component (B) in an arbitrary order.

(2) To add the component (C) to an inert organic solvent, in the presence or absence of the conjugated diene compound monomer to be polymerized, and add the molecular weight controller described above, then add the component (A) and the component (B) in an arbitrary order.

(3) To add the component (A) to an inert organic solvent, in the presence or absence of the conjugated diene compound monomer to be polymerized, and add the component (C) and the molecular weight controller described above in an arbitrary order, then add the component (B).

(4) To add the component (B) to an inert organic solvent, in the presence or absence of the conjugated diene compound monomer to be polymerized, and add the component (C) and the molecular weight controller described above in an arbitrary order, then add the component (A).

(5) To add the component (C) to an inert organic solvent, in the presence or absence of the conjugated diene compound monomer to be polymerized, and add the component (A) and the component (B) in an arbitrary order, then add the molecular weight controller described above.

Also, each component may be aged in advance and used. Particularly, it is preferred to age the component (A) and the component (C).

As the aging conditions, the component (A) and the component (C) are mixed in an inert solvent, in the presence or absence of the conjugated diene compound monomer to be polymerized. The aging temperature is -50 to 80°C and preferably -10 to 50°C. The aging time is 0.01 to 24 hours, preferably 0.05 to 5 hours, and particularly preferably 0.1 to 1 hour.

In the present invention, each catalyst component can also be used as supported on an inorganic compound, or an organic polymer compound.

The conjugated diene compound monomer includes 1,3-butadiene, isoprene, 1,3-pentadiene, 2-ethyl-1,3-butadiene, 2,3-dimethylbutadiene, 2-methylpentadiene, 4-methylpentadiene, 2,4-hexadiene, and the like. Among them, a conjugated diene compound monomer mainly containing 1,3-butadiene is preferred.

These monomer components may be used singly or two or more kinds of monomer components may be used in combination.

Here, the conjugated diene compound monomer to be polymerized may be either the whole amount or a part of the monomers. In the case of a part of the monomers, the contact mixture can be mixed with the residual monomer or the residual monomer solution. The mixture may contain, other than the conjugated diene, olefin compounds such as ethylene, propylene, allene, 1-butene, 2-butene, 1,2-butadiene, pentene, cyclopentene, hexene, cyclohexene, octene, cyclooctadiene, cyclododecatriene, norbornene and norbornadiene and the like.

Polymerization method is not particularly limited, and bulk polymerization in which a conjugated diene monomer itself such as 1,3-butadiene is used as the polymerization solvent, solution polymerization or the like can also be applied. The solvent in solution polymerization includes aliphatic hydrocarbon such as butane, pentane, hexane and heptane, alicyclic hydrocarbon such as cyclopentane and cyclohexane, aromatic hydrocarbon such as benzene, toluene, xylene and ethylbenzene, olefinic hydrocarbon such as the olefin compounds described above, cis-2-butene and trans-2-butene, and the like.

Among them, benzene, toluene, cyclohexane, a mixture of cis-2-butene and trans-2-butene or the like is preferably used.

The polymerization temperature is preferably in the range of from -30 to 150°C, and particularly preferably in the range of from 0 to 40°C. The polymerization time is preferably 1 minute to 12 hours, more preferably 5 minutes to 5 hours, and particularly preferably 10 minutes to 1 hour.

The conjugated diene polymer obtained in the present invention includes cis-1,4-polybutadiene having preferably 99% or more, more preferably 99.2% or more, and particularly preferably 99.5% or more of cis-1,4-structure. Also, the intrinsic viscosity [η] of the conjugated diene polymer can be controlled to preferably from 0.1 to 10, further more preferably from 1 to 7, and particularly preferably from 1.5 to 5.

The number-average molecular weight (Mn) of the conjugated diene polymer obtained in the present invention is preferably from 10,000 to 1,000,000, further more preferably from 100,000 to 700,000, and particularly preferably from 150,000 to 550,000. Also, the ratio of the weight-average molecular weight (Mw) to the number-average molecular weight (Mn) (Mw/Mn) of the conjugated diene polymer is preferably from 1.5 to 10, more preferably from 1.5 to 7, further more preferably from 1.5 to 5, and particularly preferably from 1.5 to 3. When Mw/Mn is low, processability may be deteriorated.

The melting point (Tm) of the conjugated diene polymer obtained in the present invention by differential scanning calorimetry (DSC) is preferably -5°C or more. When the melting point (Tm) is lower than -5°C, crystallinity of polybutadiene is the same as that of the conventional polybutadiene, and properties such as abrasion resistance and crack growth resistance cannot be sufficiently improved. In addition, the heat of fusion is preferably 45 J/g or more.

The modifying agent used in the present invention is a carbonyl compound, and is preferably at least one selected from the group consisting of carbonyl compounds having an amino group and carbonyl compounds having an alkoxy group. The amino group is preferably an aminoalkyl group combined with an alkyl group having 1 to 6 of carbon atom, and the alkoxy group is preferably an alkoxy group combined with an alkyl group having 1 to 6 of carbon atom. In addition, the carbonyl compound is preferably an aromatic carbonyl compound.

The carbonyl compound (preferably an aromatic carbonyl compound) having an amino group (preferably an aminoalkyl group combined with an alkyl group having 1 to 6 of carbon atom) is more preferably an aminobenzophenone compound. Examples of the specific carbonyl compound include 4-dimethylaminoacetophenone, 4-diethylaminoacetophenone, 4-dimethylaminopropiophenone, 4-diethylaminopropiophenone, 1,3-bis(diphenylamino)-2-propanone, 1,7-bis(methylethylamino)-4-heptanone,
4-dimethylaminobenzophenone, 4-diethylaminobenzophenone, 4-dibutylaminobenzophenone, 4-diphenylaminobenzophenone, 4,4'-bis(dimethylamino)benzophenone,
4,4'-bis(diethylamino)benzophenone,
4,4'-bis(dibutylamino)benzophenone,
4,4'-bis(diphenylamino)benzophenone,
4-dimethylaminobenzaldehyde, 4-diphenylaminobenzaldehyde, 4-divinylaminobenzaldehyde, and the like. Among these compounds, 4,4'-bis(diethylamino)benzophenone is particularly preferred. These modifying agents may be used singly or two or more kinds of modifying agents may be used in combination.

Also, the carbonyl compound (preferably an aromatic carbonyl compound) having an alkoxy group (preferably an alkoxy group combined with an alkyl group having 1 to 6 of carbon atom) is more preferably an alkoxybenzophenone compound. Examples of the specific carbonyl compound include 4-methoxyacetophenone, 4-ethoxyacetophenone, 4-methoxypropiophenone, 4-ethoxypropiophenone, 1,3-diphenoxy-2-propanone, 1,7-dimethoxy-4-heptanone, 4-methoxybenzophenone, 4-ethoxybenzophenone, 4-butoxybenzophenone, 4-phenoxybenzophenone, 4,4'-dimethoxybenzophenone, 4,4'-diethoxybenzophenone, 4,4'-dibutoxybenzophenone, 4,4'-diphenoxybenzophenone, 4-methoxybenzaldehyde, 4-phenoxybenzaldehyde, 4-vinyloxybenzaldehyde, heliotropin, and the like. Among these compounds, 4,4'-dimethoxybenzophenone is particularly preferred. These modifying agents may be used singly or two or more kinds of modifying agents may be used in combination.

As the organic solvent used in the modification reaction, one in which itself is not reacted with a diene-based rubber can be freely used. Specific examples thereof include aromatic hydrocarbon solvents such as benzene, chlorobenzene, toluene and xylene, aliphatic hydrocarbon solvents having 5 to 10 of carbon atom such as n-heptane, n-hexane, n-pentane and n-octane, alicyclic hydrocarbon solvents such as cyclohexane, methylcyclohexane, tetralin and decalin, and the like. Also, methylene chloride, tetrahydrofuran and the like can be used. Usually, the solvent same as the one used in the production of a diene-based rubber is used.

The temperature of the reaction solution in the modification reaction is preferably in the range of from 0 to 100°C, and particularly preferably in the range of from 20 to 80°C. When the temperature is too low, progress of the modification reaction is slow, and when the temperature is too high, the polymer is likely to gelate. The time of the modification reaction is not particularly limited, and is preferably in the range of from 10 minutes to 6 hours. When the modification reaction time is too short, the reaction is not sufficiently progressed, and when the time is too long, the polymer is likely to gelate.

The amount of the diene-based rubber in the modification reaction solution is in the range of from usually 5 to 500 g, preferably 20 to 300 g, and further preferably 30 to 200 g, per 1 liter of the solvent.

The amount of the modifying agent to be used in the modification reaction is in the range of from usually 0.01 to 150 millimole, preferably 0.1 to 100 millimole and further preferably 0.2 to 50 millimole, per 100 g of the diene-based rubber. When too small amount is used, the amount of the modifying group to be introduced in the modified diene-based

rubber is too small, and modification effect is small. When too large amount is used, unreacted modifying agent remains in the modified diene-based rubber, and it takes time to remove it, thus is not preferred.

The modification reaction is performed by, for example, a method of adding a modifying agent following the polymerization reaction, then adding a polymerization terminator, and removing the solvent and unreacted monomer remained in the reaction product by a steam stripping method, a vacuum drying method or the like, a method of adding a polymerization terminator then adding a modifying agent, a method of dissolving a dried polymer in the solvent again and then adding a modifying agent and a catalyst, and the like. Since the activity of the portion in which the polymer is reacted with the modifying agent may be reduced depending on the kind of the polymerization terminator, a modifying agent is preferable added before termination of the polymerization.

The modification degree of the modified cis-1,4-polybutadiene of the present invention is determined by a method using gel permeation chromatography (GPC) measurement. This method will be described in detail, based on Fig. 1 and Fig. 2.

The vertical axis in Fig. 1 shows the ratio of a peak area value UV obtained by UV absorbance at 274 nm of the polymer obtained by GPC measurement to a peak area value RI obtained by differential refractive index (RI), the value of UV/RI.

The horizontal axis represents the value of $(1/Mn) \times 10^4$, and Mn is a number-average molecular weight. In Fig. 1, Li-BR (unmodified) represents a line obtained by plotting the value of UV/RI of the polymer itself produced by polymerizing 1,3-butadiene by living anionic polymerization with a Li-based catalyst for each of the polymers with different number-average molecular weight Mn, and it can be approximated as a straight line. Also, Li-BR (modified) represents a line obtained by plotting the value of UV/RI of the polymer produced by polymerization by living anionic polymerization with a Li-based catalyst and then modifying it by reacting the polymerization end with 4,4'-bis(diethylamino)benzophenone for each of the polymers with different number-average molecular weight Mn, and it can be approximated as a straight line.

In the case of living anionic polymerization, one molecule of the polymer and one molecule of the modifying agent quantitatively react, thus the difference of the UV/RI value of Li-BR (modified) and the UV/RI value of Li-BR (unmodified) in a certain number-average molecular weight (Mn1) is defined as A. Since this value shows the variation in the UV/RI values when one molecule of the modifying agent reacts with one molecular chain that is its number-average molecular weight (Mn1), the modification degree can be calculated relative to this value.

In addition, the vertical axis in Fig. 2 shows the ratio of a peak area value UV obtained by UV absorbance at 238 nm of the polymer obtained by GPC measurement to a peak area value RI obtained by differential refractive index (RI), the value of UV/RI.

The horizontal axis represents the value of $(1/Mn) \times 10^4$, and Mn is a number-average molecular weight. In Fig. 2, Li-BR (unmodified) represents a line obtained by plotting the value of UV/RI of the polymer itself produced by polymerizing 1,3-butadiene by living anionic polymerization with a Li-based catalyst for each of the polymers with different number-average molecular weight Mn, and it can be approximated as a straight line. Also, Li-BR (modified) represents a line obtained by plotting the value of UV/RI of the polymer produced by polymerizing 1, 3-butadiene by living anionic polymerization with a Li-based catalyst and then modifying it by reacting the polymerization end with 4,4'-dimethoxybenzophenone for each of the polymers with different number-average molecular weight Mn.

In the case of living anionic polymerization, one molecule of the polymer and one molecule of the modifying agent quantitatively react, thus the difference of the UV/RI value of Li-BR (modified) and the UV/RI value of Li-BR (unmodified) in a certain number-average molecular weight (Mn1) is defined as A. Since this value shows the variation in the UV/RI values when one molecule of the modifying agent reacts with one molecular chain that is its number-average molecular weight (Mn1), the modification degree can be calculated relative to this value.

Either in the case of Fig. 1 and Fig. 2, the UV/RI value is respectively calculated for the modified cis-1,4-polybutadiene of the present invention having a certain number-average molecular weight (Mn1) and the unmodified cis-1,4-polybutadiene obtained by the same method used in the modification, and the difference therebetween is defined as B. Then, the modification degree of the modified cis-1,4-polybutadiene of the present invention can be represented by the following equation.

[Mathematical Formula 1]

$$\text{Modification degree} = B/A$$

The modification degree of the cis-1,4-polybutadiene of the present invention is not particularly limited, but is preferably more than 0.1 and more preferably more than 0.5. Also, the modification degree is preferably not more than 20, more preferably not more than 15, and further preferably not more than 10. In a modification degree of 0.1 or less, the effect by modification may not be sufficient, and in a modification degree of 20 or more, the original characteristics

of cis-1,4-polybutadiene may be impaired. In the preferred modification degree, dispersibility of a filler in a rubber can be enhanced, due to the interaction of the polar group (amino group, etc.) of the modifying agent and the polar group of the filler.

The modified conjugated diene polymer of the present invention is singly or blended with other synthetic rubber or a natural rubber, oil extended with process oil as necessary, and subsequently vulcanized by adding a filler such as carbon black or silica, a vulcanizing agent, a vulcanization accelerator or other usual compounding agent to form a rubber compound, thereby preferably being used for rubber application for which mechanical characteristics and abrasion resistance are required, such as tire, hose, belt, other various industrial parts, and the like.

As other synthetic rubber contained in the rubber composition, a vulcanizable rubber is preferred, and specifically, ethylene-propylene-diene rubber (EPDM), nitrile rubber (NBR), butyl rubber (IIR), chloroprene rubber (CR), polyisoprene, high-cis-polybutadiene rubber, low-cis-polybutadiene rubber (BR), styrene-butadiene rubber (SBR), butyl rubber, chlorinated butyl rubber, brominated butyl rubber, acrylonitrile-butadiene rubber and the like can be exemplified. Among them, SBR is preferred. Furthermore, among SBR, solution-polymerized styrene-butadiene copolymer rubber (S-SBR) is particularly preferred. These rubber may be used singly or two or more kinds of rubber may be used in combination.

Moreover, the modified conjugated diene polymer of the present invention can be used as a modifier of plastic, for example, impact-resistant polystyrene, more specifically, a rubber-modified impact-resistant polystyrene-based resin composition can be produced.

As the method for producing the rubber-modified impact-resistant polystyrene-based resin composition, a method of polymerizing a styrene-based monomer in the presence of rubbery polymer is adopted, and a bulk polymerization method and a bulk suspension polymerization method are an economically advantageous method. The styrene-based monomer includes one or a mixture of two or more kinds of the styrene-based monomers conventionally known for producing a rubber-modified impact-resistant polystyrene-based resin composition, for example, styrene, alkyl-substituted styrene such as α-methylstyrene and p-methylstyrene, halogen-substituted styrene such as chlorostyrene or the like. Among them, styrene is preferred.

Other than the rubbery polymer, a styrene-butadiene copolymer, ethylene-propylene, ethylene-vinyl acetate, acrylic rubber and the like can be used together within 50% by weight relative to the rubbery polymer, during production as necessary. Also, the resin produced by these methods may be blended. Furthermore, the polystyrene-based resin not containing the rubber-modified polystyrene-based resin composition produced by these methods may be mixed to produce the resin composition. As described referring to an example of the bulk polymerization method, rubbery polymer (1 to 25% by weight) is dissolved in styrene monomer (99 to 75% by weight), a solvent, a molecular weight controller, a polymerization initiator and the like are added in some cases, and the rubbery polymer is converted to dispersed particles up to a styrene monomer conversion rate of 10 to 40%. The rubber phase forms a continuous phase until these rubber particles are produced. Polymerization is further continued to undergo phase conversion to a dispersion phase as the rubber particles (granulation step), and is continued until a conversion rate of 50 to 99%, to produce the rubber-modified impact-resistant polystyrene-based resin composition.

A dispersed particle of the rubbery polymer (rubber particle) is a particle dispersed in the resin, and is formed of a rubbery polymer and a polystyrene-based resin, and the polystyrene-based resin is grafted to, or is not grafted but is occluded in the rubbery polymer. The rubbery polymer referred in this invention with a diameter of the dispersed particle in the range of from 0.5 to 7.0 μm, and preferably from 1.0 to 3.0 μm can be preferably produced.

Those having a graft rate in the range of from 150 to 350 can be preferably produced. The production method may be batch-type or continuous-type, and is not particularly limited.

A raw material solution mainly including the above styrene-based monomer and rubbery polymer is polymerized in a complete mixing type reactor. The complete mixing type reactor should be one in which the raw material solution maintains a uniform mixing state in the reactor, and the preferred reactor is provided with a stirring blades such as a helical ribbon, double helical ribbon, an anchor, and the like. It is preferred to install a draft tube in a helical ribbon type stirring blade to further reinforce a vertical circulation in the reactor.

During production or after production, an antioxidant, a stabilizer such as an ultraviolet absorber, a mold release agent, a lubricant, a coloring agent, various fillers and various plasticizers, and known additives such as a higher fatty acid, an organopolysiloxane, a silicone oil, a flame retardant, an antistatic agent and a foaming agent may be added to the rubber-modified impact-resistant polystyrene-based resin composition may be properly added as necessary.

The rubber composition obtained by the invention of the present application is used for various rubber application like industrial supplies such as tire, rubber vibration insulator, belt, hose and seismic isolation rubber, and footwear such as men' s shoes, women' s shoes and sports shoes. In that case, it is preferred to blend such that at least 10% by weight of the modified conjugated diene polymer of the present invention is contained in the rubber component. Also, the rubber-modified impact-resistant polystyrene-based resin composition can be used for various known molded articles, but it is suitable for electric and industrial application fields, packaging materials, housing-related materials, materials for OA equipment, tools, daily necessities and the like, since it is excellent in flame retardancy, impact strength, and tensile strength. For example, it can be used in a wide range of applications such as housing of a television, a personal computer,

air-conditioning and the like, exterior materials for an office equipment such as a copier and a printer, and food containers of frozen foods, lactic acid beverage, ice-cream and the like.

Examples

Hereinafter, examples based on the present invention will be specifically described. However, the present invention is not limited thereto. First, various measurement methods used in examples are shown below.

Microstructure: It was determined according to an infrared absorption spectrum analysis. A microstructure was calculated from absorption intensity ratios at cis-740 $cm^{-1}$, trans-967 $cm^{-1}$, and vinyl-910 $cm^{-1}$.

Mooney Viscosity ($ML_{1+4}$, 100°C) : The viscosity was determined in accordance with JIS-K 6300 by pre-heating a rubber at 100°C for one minute and then measuring the viscosity for 4 minutes using a Mooney viscometer, manufactured by Shimadzu Corporation. The obtained value was shown as a Mooney viscosity of the rubber ($ML_{1+4}$, 100°C).

Number Average Molecular Weight (Mn) and Weight Average Molecular Weight (Mw) : A molecule weight distribution curve was obtained according to a method using GPC (manufactured by Shimadzu Corporation), in which polystyrene as a standard substance and tetrahydrofuran as a solvent were used, at a temperature of 40°C, and calculation was performed using a calibration curve obtained from the molecule weight distribution curve to obtain a number average molecular weight and a weight average molecular weight.

Intrinsic viscosity [$\eta$] : The viscosity was measured at 30°C using a toluene solution of a sample.

Melting point, heat of fusion: these were determined by measuring differential scanning calorimetry (DSC) using a DSC instrument manufactured by Seiko Instruments Inc., in the temperature range of from -150 to 100°C at a heating rate of 10°C/min under a nitrogen atmosphere.

Processability (swell): the ratio of the cross sectional area of composition when extruded at 100°C, a shear rate of 100 $sec^{-1}$ to the die orifice cross sectional area (L/D = 1.5 mm/1.5 mm) was determined as a measure of the extrusion processability of the composition using a processability tester (Monsanto Company, MPT), and expressed as an index, using Comparative Example 6 as 100 (smaller index is favorable).

Tear strength: this was measured according to JIS-K6252. Tear strength was expressed as an index relative to a value in Comparative Example 6, defined as 100 (larger index is favorable).

Impact Resilience: The impact resilience was measured in accordance with BS903 using a Dunlop tripsometer at room temperature, and was shown as an index relative to a value in Comparative Example 6, defined as 100 (the higher the index, the better the impact resilience).

Abrasion Resistance: Lambourn abrasion resistance was measured in accordance with JIS-K 6264 at a slip rate of 20%, and is shown as an index relative to a value in Comparative Example 6, defined as 100 (the higher the index, the better the abrasion resistance).

Crack growth resistance: Using a fixed elongation tester (manufactured by Ueshima Seisakusho Co. , Ltd.), a test specimen, which was a dumbbell-shaped No. 3 (JIS-K 6251) specimen having a 0.5 mm-cut at the central part, was broken under conditions of an initial strain of 50% and 300 times/minute. And the breaking number of time was determined. The results were shown as an index relative to a value in Comparative Example 6, defined as 100 (the higher the index, the better the elongation fatigue resistance).

Heat Build-up and Permanent Set: The measurement was performed in accordance with JIS K 6265. The results were shown as an index relative to a value in Comparative Example 6, defined as 100 (the smaller the index, the better the heat build-up and the permanent set).

Heat generation property (tan$\delta$) : it was measured using a viscoelastometer (manufactured by Alpha Technologies Inc. , RPA2000), at a temperature of 50°C, a frequency of 1 Hz, a dynamic distortion of 3% and 10%, and expressed as an index relative to a value in Comparative Example 6 as 100 (the smaller the index, more favorable the low energy loss property).

(Example 1)

An autoclave having an internal capacity of 2 L was purged with nitrogen, a solution including 260 ml of toluene and 140 ml of butadiene was charged to the autoclave. Subsequently, 0.5 $kg/cm^2$ of a hydrogen gas was introduced, and the temperature of the solution was set to 30°C. Thereafter, 3.3 ml of a toluene solution (2.85 mol/L) of triethyl aluminum (TEA) was added, and the resulting solution was stirred at 500 rpm for 3 minutes. Next, 2 ml of a toluene solution (20 mmol/L) of
tris(2,2,6,6-tetramethylheptane-3,5-dionato)yttrium was added, and the resulting solution was stirred at 30°C for 30 minutes, and cooled to 1.0°C, then 0.2 ml of a toluene solution (0.43 mol/L) of
triphenylcarbeniumtetrakis(pentafluorophenyl)borate was added to initiate polymerization. After polymerization at 10°C for 30 minutes, 0.8 ml of a toluene solution (0.5 mol/L) of 4,4'-bis(diethylamino)benzophenone as a modifying agent was added, and a modification reaction was performed for 10 minutes while heating from 10°C to 40°C. 5 ml of ethanol was

added, and the resulting mixture was stirred for 3 minutes to stop the reaction, then 4 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to obtain 4.1 g of modified polybutadiene. The melting point of the modified polybutadiene by DSC measurement was -5.1°C, and the heat of fusion was 46.5 J/g. Other raw rubber properties are shown in Table 1.

(Example 2)

Polymerization and modification were performed in the same manner as in Example 1, except that the addition amount of the toluene solution (2.85 mol/L) of triethyl aluminum (TEA) was set to 4 ml, to obtain 7.3 g of modified polybutadiene. The melting point of the modified polybutadiene by DSC measurement was -4.8°C, and the heat of fusion was 47.1 J/g. Other raw rubber properties are shown in Table 1.

(Example 3)

Polymerization and modification were performed in the same manner as in Example 1, except that the addition amount of the toluene solution (2.85 mol/L) of triethyl aluminum (TEA) was set to 4.7 ml, to obtain 10.3 g of modified polybutadiene. Raw rubber properties are shown in Table 1.

(Example 4)

Polymerization and modification were performed in the same manner as in Example 3, except that the temperature at which 0.2 ml of the toluene solution (0.43 mol/L) of triphenylcarbeniumtetrakis(pentafluorophenyl)borate was added to initiate polymerization was changed to 15°C, and polymerized at 15°C for 30 minutes, to obtain 27.3 g of modified polybutadiene. The melting point of the modified polybutadiene by DSC measurement was -4.6°C, and the heat of fusion was 46.4 J/g. Other raw rubber properties are shown in Table 1.

(Example 5)

Polymerization and modification were performed in the same manner as in Example 3, except that the temperature at which 0.2 ml of the toluene solution (0.43 mol/L) of triphenylcarbeniumtetrakis(pentafluorophenyl)borate was added to initiate polymerization was changed to 20°C, and the polymerization temperature was set to 20°C, to obtain 44.0 g of modified polybutadiene. Raw rubber properties are shown in Table 1.

(Example 6)

Polymerization and modification were performed in the same manner as in Example 4, except that an autoclave having an internal capacity of 2 L was purged with nitrogen, and a solution including 280 ml of toluene and 120 ml of butadiene was charged to the autoclave, to obtain 23.6 g of modified polybutadiene. Raw rubber properties are shown in Table 1.

(Example 7)

Polymerization and modification were performed in the same manner as in Example 4, except that an autoclave having an internal capacity of 2 L was purged with nitrogen, a solution including 300 ml of toluene and 100 ml of butadiene was charged to the autoclave, then 0.3 kg/cm$^2$ of a hydrogen gas was introduced, to obtain 21.2 g of modified polybutadiene. Raw rubber properties are shown in Table 1.

(Example 8)

Polymerization was performed in the same manner as in Example 6, except that the polymerization time was set to 45 minutes, to obtain 36.7 g of modified polybutadiene. The melting point of the modified polybutadiene by DSC measurement was -4.3°C, and the heat of fusion was 45.9 J/g. Other raw rubber properties are shown in Table 1.

(Example 9)

Polymerization was performed in the same manner as in Example 6, except that the polymerization time was set to 60 minutes, to obtain 38.5 g of modified polybutadiene. Raw rubber properties are shown in Table 1.

(Comparative Example 1)

Polymerization was performed in the same manner as in Example 8, except that the toluene solution of 4,4'-bis(diethylamino)benzophenone as a modifying agent was not added, to obtain 37. 0 g of unmodified polybutadiene. Raw rubber properties are shown in Table 1.

(Example 10)

An autoclave having an internal capacity of 2 L was purged with nitrogen, a solution including 320 ml of toluene and 180 ml of butadiene was charged to the autoclave. The temperature of the solution was set to 30°C, then 1.25 ml of a toluene solution (2.0 mol/L) of triethyl aluminum (TEA) was added, and the resulting solution was stirred at 500 rpm for 3 minutes. Next, 0.4 ml of a toluene solution (20 mmol/L) of tris(2,2,6,6-tetramethylheptane-3,5-dionato)yttrium was added, and the resulting solution was stirred at 30°C for 30 minutes, and then 4 ml of a toluene solution (4 mmol/L) of triphenylcarbeniumtetrakis(pentafluorophenyl)borate was added to initiate polymerization. After polymerization at 60°C for 20 minutes, 2.5 ml of a toluene solution (1 mol/L) of 4,4'-bis(diethylamino)benzophenone as a modifying agent was added, and a modification reaction was performed at 60°C for 30 minutes. 5 ml of ethanol was added, and the resulting mixture was stirred for 3 minutes to stop the reaction, then 4 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to obtain 17.0 g of modified polybutadiene. Raw rubber properties are shown in Table 2.

(Example 11)

Polymerization was performed in the same manner as in Example 10, except that the addition amount of the toluene solution (2.0 mol/L) of triethyl aluminum (TEA) was set to 2.5 ml, to obtain 17.9 g of modified polybutadiene. Raw rubber properties are shown in Table 2.

(Example 12)

Polymerization was performed in the same manner as in Example 10, except that the addition amount of the toluene solution (2.0 mol/L) of triethyl aluminum (TEA) was set to 3.1 ml, to obtain 15.2 g of modified polybutadiene. Raw rubber properties are shown in Table 2.

(Example 13)

Polymerization was performed in the same manner as in Example 10, except that the addition amount of the toluene solution (2.0 mol/L) of triethyl aluminum (TEA) was set to 3.75 ml, to obtain 13.9 g of modified polybutadiene. Raw rubber properties are shown in Table 2.

(Example 14)

Polymerization was performed in the same manner as in Example 10, except that the addition amount of the toluene solution (1 mol/L) of 4,4'-bis(diethylamino)benzophenone as a modifying agent was set to 0.5 ml, to obtain 19.4 g of modified polybutadiene. Raw rubber properties are shown in Table 2.

(Example 15)

Polymerization was performed in the same manner as in Example 10, except that the addition amount of the toluene solution (1 mol/L) of 4,4'-bis(diethylamino)benzophenone as a modifying agent was set to 0.2 ml, to obtain 21.1 g of modified polybutadiene. Raw rubber properties are shown in Table 2.

(Example 16)

Polymerization was performed in the same manner as in Example 10, except that the addition amount of the toluene solution (1 mol/L) of 4,4'-bis(diethylamino)benzophenone as a modifying agent was set to 0.1 ml, to obtain 23.0 g of modified polybutadiene. Raw rubber properties are shown in Table 2.

(Example 17)

Polymerization was performed in the same manner as in Example 10, except that the addition amount of the toluene solution (1 mol/L) of 4,4'-bis(diethylamino)benzophenone as a modifying agent was set to 0.05 ml, to obtain 24.7 g of modified polybutadiene. Raw rubber properties are shown in Table 2.

(Comparative Example 2)

Polymerization was performed in the same manner as in Example 10, except that the toluene solution (1 mol/L) of 4,4'-bis(diethylamino)benzophenone as a modifying agent was not added, to obtain 17.3 g of unmodified polybutadiene. Raw rubber properties are shown in Table 2.

(Example 18)

Polymerization was performed in the same manner as in Example 10, except that the polymerization temperature was set to 80°C, and the polymerization time was set to 10 minutes, to obtain 17.1 g of modified polybutadiene. Raw rubber properties are shown in Table 3.

(Example 19)

Polymerization was performed in the same manner as in Example 11, except that the polymerization temperature was set to 80°C, and the polymerization time was set to 10 minutes, to obtain 24.5 g of modified polybutadiene. Raw rubber properties are shown in Table 3.

(Example 20)

Polymerization was performed in the same manner as in Example 12, except that the polymerization temperature was set to 80°C, and the polymerization time was set to 10 minutes, to obtain 31.2 g of modified polybutadiene. Raw rubber properties are shown in Table 3.

(Example 21)

Polymerization was performed in the same manner as in Example 13, except that the polymerization temperature was set to 80°C, and the polymerization time was set to 10 minutes, to obtain 22.6 g of modified polybutadiene. Raw rubber properties are shown in Table 3.

(Comparative Example 3)

Polymerization was performed in the same manner as in Example 18, except that the toluene solution (1 mol/L) of 4,4'-bis(diethylamino)benzophenone as a modifying agent was not added, to obtain 22.6 g of modified polybutadiene. Raw rubber properties are shown in Table 3.

[Table 1]

| | Microstructure (%) | | | Mw $X10^4$ | Mn $X10^4$ | Mw/Mn | Modification degree |
|---|---|---|---|---|---|---|---|
| | Cis | Trans | Vinyl | | | | |
| Example 1 | 99.7 | <0.1 | 0.3 | 58.0 | 26.3 | 2.21 | 0.52 |
| Example 2 | 99.5 | 0.2 | 0.3 | 55.4 | 26.8 | 2.07 | 0.69 |
| Example 3 | 99.6 | 0.1 | 0.3 | 53.6 | 25.0 | 2.14 | 0.41 |
| Example 4 | 99.4 | 0.3 | 0.4 | 51.4 | 22.3 | 2.30 | 0.39 |
| Example 5 | 99.3 | 0.3 | 0.4 | 50.5 | 20.3 | 2.49 | 0.39 |
| Example 6 | 99.4 | 0.3 | 0.3 | 44.4 | 19.9 | 2.23 | 0.38 |
| Example 7 | 99.6 | 0.2 | 0.3 | 41.9 | 19.0 | 2.21 | 0.25 |
| Example 8 | 99.5 | 0.2 | 0.3 | 39.0 | 16.7 | 2.34 | 0.24 |

(continued)

| | Microstructure (%) Cis | Trans | Vinyl | Mw X10[4] | Mn X10[4] | Mw/Mn | Modification degree |
|---|---|---|---|---|---|---|---|
| Example 9 | 99.3 | 0.3 | 0.3 | 38.0 | 16.2 | 2.35 | 0.24 |
| Comparative Example 1 | 99.5 | 0.2 | 0.3 | 60.0 | 24.6 | 2.44 | 0.00 |

[Table 2]

| | Microstructure (%) Cis | Trans | Vinyl | Mw X10[4] | Mn X10[4] | Mw/Mn | Modification degree |
|---|---|---|---|---|---|---|---|
| Example 10 | 93.9 | 4.6 | 1.5 | 63.2 | 17.4 | 3.62 | 0.41 |
| Example 11 | 92.5 | 6.0 | 1.5 | 33.6 | 10.5 | 3.18 | 0.24 |
| Example 12 | 89.9 | 8.6 | 1.6 | 20.1 | 7.6 | 2.63 | 0.25 |
| Example 13 | 89.1 | 9.2 | 1.7 | 18.8 | 7.1 | 2.64 | 0.26 |
| Example 14 | 93.7 | 4.8 | 1.5 | 63.9 | 17.0 | 3.76 | 0.41 |
| Example 15 | 94.0 | 4.6 | 1.4 | 65.2 | 17.2 | 3.80 | 0.33 |
| Example 16 | 93.9 | 4.7 | 1.4 | 66.6 | 16.6 | 4.01 | 0.32 |
| Example 17 | 93.7 | 4.8 | 1.5 | 71.3 | 17.3 | 4.13 | 0.18 |
| Comparative Example 2 | 94.2 | 4.4 | 1.4 | 59.8 | 16.6 | 3.60 | 0.01 |

[Table 3]

| | Microstructure (%) Cis | Trans | Vinyl | Mw X10[4] | Mn X10[4] | Mw/Mn | Modification Degree |
|---|---|---|---|---|---|---|---|
| Example 18 | 90.7 | 7.3 | 2.1 | 52.2 | 13.3 | 3.94 | 0.12 |
| Example 19 | 86.9 | 11.0 | 2.1 | 38.4 | 9.4 | 4.10 | 0.13 |
| Example 20 | 86.8 | 11.4 | 1.8 | 46.5 | 7.8 | 5.94 | 0.20 |
| Example 21 | 84.3 | 13.5 | 2.2 | 22.8 | 6.1 | 3.73 | 0.14 |
| Comparative Example 3 | 90.9 | 7.0 | 2.1 | 48.2 | 12.5 | 3.86 | 0.00 |

(Example 22)

An autoclave having an internal capacity of 2 L was purged with nitrogen, a solution including 280 ml of toluene and 120 ml of butadiene was charged to the autoclave. Subsequently, 0.4 kg/cm$^2$ of a hydrogen gas was introduced, and the temperature of the solution was set to 30°C. Thereafter, 4.7 ml of a toluene solution (2.85 mol/L) of triethyl aluminum (TEA) was added, and the resulting solution was stirred at 500 rpm for 3 minutes. Next, 2 ml of a toluene solution (20 mmol/L) of tris(2,2,6,6-tetramethylheptane-3,5-dionato)yttrium was added, and the resulting solution was stirred at 30°C for 30 minutes, and cooled to 15°C, then 0.2 ml of a toluene solution (0.43 mol/L) of triphenylcarbeniumtetrakis(pentafluorophenyl)borate was added to initiate polymerization. After polymerization at 15°C for 45 minutes, 2 ml of a toluene solution (0.2 mol/L) of 4,4'-dimethoxybenzophenone as a modifying agent was added, and a modification reaction was performed for 10 minutes while heating from 15°C to 40°C. 5 ml of ethanol was added, and the resulting mixture was stirred for 3 minutes to stop the reaction, then 4 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to obtain 35.9 g of modified polybutadiene. The melting point of the modified polybutadiene by DSC measurement was -4.5°C, and the heat of fusion was 45.4 J/g. Other raw rubber properties are shown in Table 4.

(Example 23)

An autoclave having an internal capacity of 2 L was purged with nitrogen, a solution including 560 ml of toluene and 240 ml of butadiene was charged to the autoclave. Subsequently, 0.37 $kg/cm^2$ of a hydrogen gas was introduced, and the temperature of the solution was set to 30°C. Thereafter, 9.4 ml of a toluene solution (2.85 mol/L) of triethyl aluminum (TEA) was added, and the resulting solution was stirred at 500 rpm for 3 minutes. Next, 4 ml of a toluene solution (20 mmol/L) of tris(2,2,6,6-tetramethylheptane-3,5-dionato)yttrium was added, and the resulting solution was stirred at 30°C for 30 minutes, and cooled to 15°C, then 0.4 ml of a toluene solution (0.43 mol/L) of triphenylcarbeniumtetrakis(pentafluorophenyl)borate was added to initiate polymerization. After polymerization at 15°C for 45 minutes, 4 ml of a toluene solution (0.2 mol/L) of 4,4'-dimethoxybenzophenone as a modifying agent was added, and a modification reaction was performed for 10 minutes while heating from 15°C to 40°C. 10 ml of ethanol was added, and the resulting mixture was stirred for 3 minutes to stop the reaction, then 6 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to obtain 67.4 g of modified polybutadiene. The melting point of the modified polybutadiene by DSC measurement was -4.1°C, and the heat of fusion was 47.4 J/g.

Other raw rubber properties are shown in Table 4.

(Comparative Example 4)

An autoclave having an internal capacity of 2 L was purged with nitrogen, a solution including 560 ml of toluene and 240 ml of butadiene was charged to the autoclave. Subsequently, 0.43 $kg/cm^2$ of a hydrogen gas was introduced, and the temperature of the solution was set to 30°C. Thereafter, 9.4 ml of a toluene solution (2.85 mol/L) of triethyl aluminum (TEA) was added, and the resulting solution was stirred at 500 rpm for 3 minutes. Next, 4 ml of a toluene solution (20 mmol/L) of tris(2,2,6,6-tetramethylheptane-3,5-dionato)yttrium was added, and the resulting solution was stirred at 30°C for 30 minutes, and cooled to 15°C, then 0.4 ml of a toluene solution of triphenylcarbeniumtetrakis(pentafluorophenyl)borate (0.43 mol/L) was added to initiate polymerization. After polymerization at 15°C for 45 minutes, 10 ml of ethanol was added, and the resulting mixture was stirred for 3 minutes to stop the reaction, then 6 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to obtain 74.0 g of unmodified polybutadiene. Raw rubber properties are shown in Table 4.

(Example 24)

An autoclave having an internal capacity of 2 L was purged with nitrogen, a solution including 320 ml of toluene and 180 ml of butadiene was charged to the autoclave. The temperature of the solution was set to 30°C, then 3.75 ml of a toluene solution (2 mol/L) of triethyl aluminum (TEA) was added, and the resulting solution was stirred at 500 rpm for 3 minutes. Next, 1.25 ml of a toluene solution (20 mmol/L) of tris(2,2,6,6-tetramethylheptane-3,5-dionato)yttrium was added, and the resulting solution was stirred at 30°C for 30 minutes, and then 13.3 ml of a toluene solution (4 mmol/L) of triphenylcarbeniumtetrakis(pentafluorophenyl)borate was added to initiate polymerization. After polymerization at 40°C for 30 minutes, 4.2 ml of a toluene solution (0.2 mol/L) of 4,4'-dimethoxybenzophenone as a modifying agent was added, and a modification reaction was performed at 40°C for 30 minutes. 5 ml of ethanol was added, and the resulting mixture was stirred for 3 minutes to stop the reaction, then 4 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to obtain 12 . 8 g of modified polybutadiene. Raw rubber properties are shown in Table 4.

(Example 25)

An autoclave having an internal capacity of 2 L was purged with nitrogen, a solution including 320 ml of toluene and 180 ml of butadiene was charged to the autoclave. The temperature of the solution was set to 30°C, then 1.23 ml of a toluene solution (2 mol/L) of triethyl aluminum (TEA) was added, and the resulting solution was stirred at 500 rpm for 3 minutes. Next, 0.4 ml of a toluene solution (20 mmol/L) of tris(2,2,6,6-tetramethylheptane-3,5-dionato)yttrium was added, and the resulting solution was stirred at 30°C for 30 minutes, and then 4 ml of a toluene solution (4 mmol/L) of triphenylcarbeniumtetrakis(pentafluorophenyl)borate was added to initiate polymerization. After polymerization at 60°C for 20 minutes, 1.0 ml of a toluene solution (0.2 mol/L) of 4,4'-dimethoxybenzophenone as a modifying agent was added,

and a modification reaction was performed at 60°C for 30 minutes. 5 ml of ethanol was added, and the resulting mixture was stirred for 3 minutes to stop the reaction, then 4 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to obtain 22.2 g of modified polybutadiene. Raw rubber properties are shown in Table 4.

(Example 26)

Polymerization and modification were performed in the same manner as in Example 25, except that the addition amount of the toluene solution (0.2 mol/L) of 4,4'-dimethoxybenzophenone as a modifying agent was set to 4.0 ml, to obtain 21.7 g of modified polybutadiene. Raw rubber properties are shown in Table 4.

(Example 27)

Polymerization and modification were performed in the same manner as in Example 26, except that the addition amount of the toluene solution (2 mol/L) of triethyl aluminum (TEA) was set to 3.75 ml, to obtain 14.0 g of modified polybutadiene. Raw rubber properties are shown in Table 4.

[Table 4]

| | Microstructure (%) Cis | Trans | Vinyl | Mw X$10^4$ | Mn, X$10^4$ | Mw/Mn | Modification degree |
|---|---|---|---|---|---|---|---|
| Example 22 | 99.4 | 0.3 | 0.3 | 48.4 | 20.0 | 2.42 | 0.30 |
| Example 23 | 99.4 | 0.2 | 0.3 | 59.5 | 24.9 | 2.39 | 0.55 |
| Example 24 | 95.4 | 3.4 | 1.1 | 36.2 | 9.5 | 3.83 | 0.84 |
| Example 25 | 93.9 | 4.6 | 1.4 | 68.4 | 16.6 | 4.12 | 0.50 |
| Example 26 | 94.0 | 4.6 | 1.3 | 67.2 | 17.6 | 3.82 | 0.57 |
| Example 27 | 89.2 | 9.1 | 1.8 | 21.1 | 7.1 | 2.97 | 0.54 |
| Comparative Example 4 | 99.5 | 0.2 | 0.3 | 60.0 | 24.6 | 2.44 | 0.00 |

(Comparative Example 5)

An autoclave having an internal capacity of 2 L was purged with nitrogen, a solution including 560 ml of toluene and 240 ml of butadiene was charged to the autoclave. Subsequently, 0.43 kg/$cm^2$ of a hydrogen gas having was introduced, and the temperature of the solution was set to 30°C. Thereafter, 9.4 ml of a toluene solution (2.85 mol/L) of triethyl aluminum (TEA) was added, and the resulting solution was stirred at 500 rpm for 3 minutes. Next, 4 ml of a toluene solution (20 mmol/L) of tris(2,2,6,6-tetramethylheptane-3,5-dionato)yttrium was added, and the resulting solution was stirred at 30°C for 30 minutes, and cooled to 15°C, then 0.38 ml of a toluene solution (0.43 mol/L) of triphenylcarbeniumtetrakis(pentafluorophenyl)borate was added to initiate polymerization. After polymerization at 15°C for 45 minutes, 5 ml of ethanol was added, and the resulting mixture was stirred for 3 minutes to stop the reaction, then 8 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to obtain 74.0 g of unmodified polybutadiene.

Raw rubber properties are shown in Table 5.

(Example 28)

After polymerization at 15°C for 45 minutes as same as in Comparative Example 5, 1.6 ml of a toluene solution (0.5 mol/L) of 4,4'-bis(diethylamino)benzophenone as a modifying agent was added, and a modification reaction was performed for 10 minutes while heating from 10°C to 40°C. 5 ml of ethanol was added, and the resulting mixture was stirred for 3 minutes to stop the reaction, then 8 ml of an ethanol/heptane (1/1) solution containing an antioxidant was further added thereto. After releasing the pressure in the autoclave, the polymerized liquid was charged to ethanol, and polybutadiene was collected. Subsequently, the collected polybutadiene was dried at 70°C for 3 hours in a vacuum to

obtain 74.6 g of modified polybutadiene. Raw rubber properties are shown in Table 5.

(Comparative Example 6)

Using UBEPOL-BR150L (polymer polymerized using a Co-based catalyst) manufactured by UBE INDUSTRIES, LTD., according to the formulation shown in Table 6, primary blending for adding carbon black, zinc oxide, stearic acid, an antioxidant and SUNTIGHT to the polymer and kneading the ingredients with a plasto mill was performed, and then secondary blending for adding a vulcanization accelerator and sulfur to the kneaded mass with rolls was performed to prepare a compounded rubber. Die swell was measured using this compounded rubber.

Furthermore, the compounded rubber was molded according to the desired physical properties, and vulcanizing-pressed at 150°C to obtain vulcanized products, and then physical properties were measured. The measurement results of the physical properties of the various compositions are shown in Table 7.

(Comparative Example 7)

Using the unmodified polybutadiene synthesized according to Comparative Example 5, a butadiene polymer composition was prepared, according to the formulation shown in Table 6 as in Comparative Example 6. The measurement results of the physical properties of the various compositions are shown in Table 7.

(Example 29)

Using the modified polybutadiene synthesized according to Example 28, a butadiene polymer composition was prepared, according to the formulation shown in Table 6 as in Comparative Example 6. The measurement results of the physical properties of the various compositions are shown in Table 7.

[Table 5]

| | Microstructure | | | Mw X$10^4$ | Mn X$10^4$ | Mw/Mn | [η] | $ML_{1+4}$ | Mod. deg. | Melt. point | Heat of fusion |
|---|---|---|---|---|---|---|---|---|---|---|---|
| | Cis | Tras | Vinyl | | | | | | | | |
| Com. Ex. 5 | 99.5 | 0.2 | 0.3 | 60.0 | 24.6 | 2.44 | 2.6 | 48 | 0 | -4.3 | 48.3 |
| Ex.28 | 99.6 | 0.1 | 0.3 | 60.3 | 24.8 | 2.43 | 2.6 | 47 | 0.77 | -4.4 | 45.6 |
| BR 150L | 98.2 | 1.0 | 0.8 | 51.0 | 22.0 | 2.30 | 2.3 | 43 0 | 0 | -7.1 | 43.5 |

Com. Ex.: Comparative Example
Ex.: Example
Mod. deg.: Modification degree
Melt. point: Melting point

The formulation is shown in Table 6.

[Table 6]

| | Comparative Example 6 | Comparative Example 7 | Example 29 |
|---|---|---|---|
| BR150L | 100 | | |
| Comparative Example 5 | | 100 | |
| Example 28 | | | 100 |
| Carbon black | 50 | 50 | 50 |
| Zinc oxide | 2.5 | 2.5 | 2.5 |
| Stearic acid | 2.0 | 2.0 | 2.0 |
| Antioxidant | 1.0 | 1.0 | 1.0 |
| SUNTIGHT E | 2.0 | 2.0 | 2.0 |
| Vulcanization accelerator 1 | 0.2 | 0.2 | 0.2 |

(continued)

| | Comparative Example 6 | Comparative Example 7 | Example 29 |
|---|---|---|---|
| Vulcanization accelerator 2 | 0.2 | 0.2 | 0.2 |
| Vulcanization accelerator 3 | 0.5 | 0.5 | 0.5 |
| Sulfur | 1.3 | 1.3 | 1.3 |
| Carbon: HAF<br>Zinc oxide: SAKAI CHEMICAL INDUSTRY CO., LTD. Sazex No. 1<br>Stearic acid: Kao Corporation Stearic acid<br>Antioxidant: Sumitomo Chemical Co., Ltd. Antigen 6C<br>Vulcanization accelerator 1: OUCHI SHINKO CHEMICAL INDUSTRIAL CO., LTD. NOCCELER D<br>Vulcanization accelerator 2: OUCHI SHINKO CHEMICAL INDUSTRIAL CO., LTD. NOCCELER DM<br>Vulcanization accelerator 3: OUCHI SHINKO CHEMICAL INDUSTRIAL CO., LTD. NOCCELER NS<br>Sulfur: Hosoi Chemical Industry Co., Ltd. Sulfur | | | |

The evaluation results of the obtained compositions are shown in Table 7.

[Table 7]

| | Comparative Example 6 | Comparative Example 7 | Example 29 |
|---|---|---|---|
| Processability (Swell) | 100 | 82 | 83 |
| Tear Strength | 100 | 116 | 105 |
| Impact Rresilience | 100 | 102 | 105 |
| Abrasion Resistance | 100 | 106 | 124 |
| Crack Growth Resistance | 100 | 113 | 183 |
| Heat Build-up | 100 | 90 | 89 |
| Permanent Set | 100 | 69 | 76 |
| Tan $\delta$ | 100 | 98 | 89 |

As shown in Table 7, the composition of Example 29 using the modified polybutadiene polymer obtained in Example 28 is excellent in processability and impact resilience, has markedly improved abrasion resistance and crack growth resistance. In addition, it is clear that the composition is excellent in low heat generation properties, and has low energy loss.

## Claims

1. A modified conjugated diene polymer obtained by a method comprising:

polymerizing a conjugated diene compound using a catalyst including (A) an yttrium compound having a bulky ligand represented by the following general formula (1), (B) an ionic compound formed of a non-coordinating anion and a cation, and (C) an organic metal compound of an element selected from the group consisting of group 2, group 12 and group 13 of the periodic table to obtain a conjugated diene polymer ; and
modifying the conjugated diene polymer with a carbonyl compound,

[Chemical Formula 1]

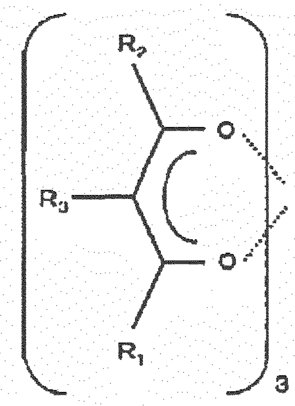

(1)

wherein, $R_1$, $R_2$ and $R_3$ represent hydrogen or a hydrocarbon group having 1 to 12 of carbon atom, 0 represents an oxygen atom, and Y represents an yttrium atom.

**2.** The modified conjugated diene polymer according to claim 1, wherein the carbonyl compound is at least one selected from the group consisting of carbonyl compounds having an amino group and carbonyl compounds having an alkoxy group.

**3.** The modified conjugated diene polymer according to claim 1 or 2, wherein the carbonyl compound is 4,4'-bisdialkylaminobenzophenone.

**4.** The modified conjugated diene polymer according to claim 1 or 2, wherein the carbonyl compound is 4,4'-dialkoxybenzophenone.

**5.** The modified conjugated diene polymer according to any one of claims 1 to 4, wherein, when the conjugated diene compound is polymerized, the molecular weight is adjusted by a compound selected from the group consisting of (1) hydrogen, (2) metal hydride compounds and (3) organic metal hydride compounds.

**6.** The modified conjugated diene polymer according to any of claims 1 to 5, wherein the conjugated diene polymer is polybutadiene having 99% or more of cis-1,4-structure.

**7.** The modified conjugated diene polymer according to any of claims 1 to 6, wherein the conjugated diene polymer is cis-1,4-polybutadiene having a ratio of the weight-average molecular weight (Mw) to the number-average molecular weight (Mn) (Mw/Mn) of 1.5 or more and less than 3.

**8.** The modified conjugated diene polymer according to any of claims 1 to 7, wherein the conjugated diene polymer has polybutadiene showing a melting point (Tm) of -5°C or more by differential scanning calorimetry (DSC).

**9.** A rubber composition using the modified conjugated diene polymer as defined in any of claims 1 to 8.

**10.** A rubber composition comprising the modified conjugated diene polymer as defined in any of claims 1 to 8, a diene polymer other than the modified conjugated diene polymer, and a rubber reinforcing agent.

**11.** The rubber composition according to claim 10, comprising silica as a rubber reinforcing agent.

**12.** A method for producing a modified conjugated diene polymer comprising:

polymerizing a conjugated diene compound using a catalyst including (A) an yttrium compound having a bulky ligand represented by the following general formula (1), (B) an ionic compound formed of a non-coordinating anion and a cation, and (C) an organic metal compound of an element selected from the group consisting group 2, group 12 and group 13 of the periodic table to obtain a conjugated diene polymer; and
modifying the conjugated diene polymer with a carbonyl compound,

[Chemical Formula 2]

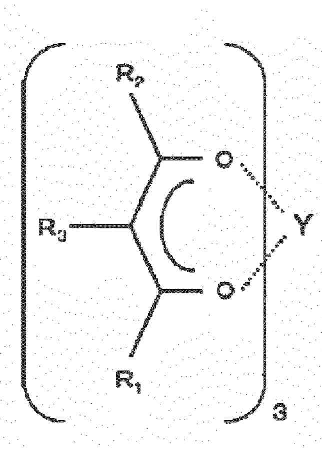

(1)

wherein (1), $R_1$, $R_2$ and $R_3$ represent hydrogen or a hydrocarbon group having 1 to 12 of carbon atom, O represents an oxygen atom, and Y represents an yttrium atom.

**13.** The method for producing a modified conjugated diene polymer according to claim 12, wherein the carbonyl compound is at least one selected from the group consisting of carbonyl compounds having an amino group and carbonyl compounds having an alkoxy group.

**14.** The method for producing a modified conjugated diene polymer according to claim 12 or 13, wherein the carbonyl compound is 4,4'-bisdialkylaminobenzophenone.

**15.** The method for producing a modified conjugated diene polymer according to claim 12 or 13, wherein the carbonyl compound is 4,4'-dialkoxybenzophenone.

**16.** The method for producing a modified conjugated diene polymer according to any one of claims 12 to 15, wherein, when the conjugated diene compound is polymerized, the molecular weight is adjusted by a compound selected from the group consisting of (1) hydrogen, (2) metal hydride compounds and (3) organic metal hydride compounds.

## Patentansprüche

**1.** Modifiziertes konjugiertes Dienpolymer, erhalten durch ein Verfahren umfassend:

das Polymerisieren einer konjugierten Dienverbindung unter Verwendung eines Katalysators, der (A) eine Yttriumverbindung mit einem sperrigen Liganden, die durch die folgende allgemeine Formel (1) wiedergegeben ist, (B) eine ionische Verbindung, die aus einem nichtkoordinierenden Anion und einem Kation gebildet ist, und (C) eine organische Metallverbindung von einem Element, ausgewählt aus der Gruppe bestehend aus Gruppe 2, Gruppe 12 und Gruppe 13 des Periodensystems, einschließt, um ein konjugiertes Dienpolymer zu erhalten; und

das Modifizieren des konjugierten Dienpolymers mit einer Carbonylverbindung,

[chemische Formel 1]

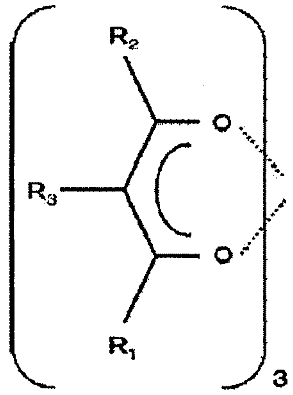

(1)

wobei $R_1$, $R_2$ und $R_3$ Wasserstoff oder eine Kohlenwasserstoffgruppe mit 1 bis 12 Kohlenstoffatomen bedeuten, O ein Sauerstoffatom bedeutet und Y ein Yttriumatom bedeutet.

**2.** Modifiziertes konjugiertes Dienpolymer gemäß Anspruch 1, wobei die Carbonylverbindung wenigstens eine, ausgewählt aus der Gruppe bestehend aus Carbonylverbindungen mit einer Aminogruppe und Carbonylverbindungen mit einer Alkoxygruppe, ist.

**3.** Modifiziertes konjugiertes Dienpolymer gemäß Anspruch 1 oder 2, wobei die Carbonylverbindung 4,4'-Bisdialkylaminobenzophenon ist.

**4.** Modifiziertes konjugiertes Dienpolymer gemäß Anspruch 1 oder 2, wobei die Carbonylverbindung 4,4'-Dialkoxybenzophenon ist.

**5.** Modifiziertes konjugiertes Dienpolymer gemäß einem der Ansprüche 1 bis 4, wobei, wenn die konjugierte Dienverbindung polymerisiert wird, das Molekulargewicht durch eine Verbindung eingestellt wird, die ausgewählt ist aus der Gruppe bestehend aus (1) Wasserstoff, (2) Metallhydridverbindungen und (3) organischen Metallhydridverbindungen.

**6.** Modifiziertes konjugiertes Dienpolymer gemäß einem der Ansprüche 1 bis 5, wobei das konjugierte Dienpolymer Polybutadien mit 99 % oder mehr cis-1,4-Struktur ist.

**7.** Modifiziertes konjugiertes Dienpolymer gemäß einem der Ansprüche 1 bis 6, wobei das konjugierte Dienpolymer cis-1,4-Polybutadien mit einem Verhältnis des Gewichtsmittels des Molekulargewichts (Mw) zu dem Zahlenmittel des Molekulargewichts (Mn) (Mw/Mn) von 1,5 oder mehr und weniger als 3 ist.

**8.** Modifiziertes konjugiertes Dienpolymer gemäß einem der Ansprüche 1 bis 7, wobei das konjugierte Dienpolymer Polybutadien aufweist, das einen Schmelzpunkt (Tm) von -5°C oder mehr, bestimmt durch Differential-Scanning-Kalorimetrie (DSC), aufweist.

**9.** Kautschukzusammensetzung, welche das modifizierte konjugierte Dienpolymer, wie es in einem der Ansprüche 1 bis 8 definiert ist, verwendet.

**10.** Kautschukzusammensetzung umfassend das modifizierte konjugierte Dienpolymer, wie es in einem der Ansprüche 1 bis 8 definiert ist, ein anderes Dienpolymer als das modifizierte konjugierte Dienpolymer, und ein Kautschukverstärkungsmittel.

**11.** Kautschukzusammensetzung gemäß Anspruch 10, umfassend Siliciumdioxid als ein Kautschukverstärkungsmittel.

**12.** Verfahren zum Herstellen eines modifizierten konjugierten Dienpolymers umfassend:

das Polymerisieren einer konjugierten Dienverbindung unter Verwendung eines Katalysators, der (A) eine Yttriumverbindung mit einem sperrigen Liganden, die durch die folgende allgemeine Formel (1) wiedergegeben ist, (B) eine ionische Verbindung, die aus einem nichtkoordinierenden Anion und einem Kation gebildet ist, und (C) eine organische Metallverbindung von einem Element, ausgewählt aus der Gruppe bestehend aus Gruppe 2, Gruppe 12 und Gruppe 13 des Periodensystems, einschließt, um ein konjugiertes Dienpolymer zu erhalten; und

das Modifizieren des konjugierten Dienpolymers mit einer Carbonylverbindung,

[chemische Formel 2]

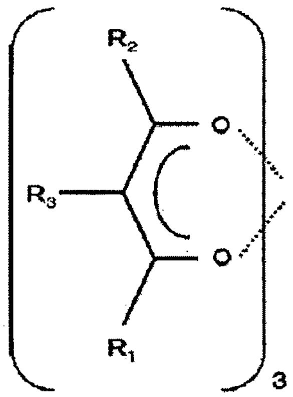

(1)

wobei $R_1$, $R_2$ und $R_3$ Wasserstoff oder eine Kohlenwasserstoffgruppe mit 1 bis 12 Kohlenstoffatomen bedeuten, O ein Sauerstoffatom bedeutet und Y ein Yttriumatom bedeutet.

**13.** Verfahren zum Herstellen eines modifizierten konjugierten Dienpolymers gemäß Anspruch 12, wobei die Carbonylverbindung wenigstens eine, ausgewählt aus der Gruppe bestehend aus Carbonylverbindungen mit einer Aminogruppe und Carbonylverbindungen mit einer Alkoxygruppe, ist.

**14.** Verfahren zum Herstellen eines modifizierten konjugierten Dienpolymers gemäß Anspruch 12 oder 13, wobei die Carbonylverbindung 4,4'-Bisdialkylaminobenzophenon ist.

**15.** Verfahren zum Herstellen eines modifizierten konjugierten Dienpolymers gemäß Anspruch 12 oder 13, wobei die Carbonylverbindung 4,4'-Dialkoxybenzophenon ist.

**16.** Verfahren zum Herstellen eines modifizierten konjugierten Dienpolymers gemäß einem der Ansprüche 12 bis 15, wobei, wenn die konjugierte Dienverbindung polymerisiert wird, das Molekulargewicht durch eine Verbindung eingestellt wird, die ausgewählt ist aus der Gruppe bestehend aus (1) Wasserstoff, (2) Metallhydridverbindungen und (3) organischen Metallhydridverbindungen.

**Revendications**

**1.** Polymère de diène conjugué obtenu par un procédé comprenant :

la polymérisation d'un composé diène conjugué en utilisant un catalyseur comprenant (A) un composé d'yttrium ayant un ligand volumineux représenté par la formule générale (1) suivante, (B) un composé ionique formé d'un anion non coordinant et d'un cation, et (C) un composé organométallique formé d'un élément choisi dans le groupe constitué du groupe 2, du groupe 12 et du groupe 13 du tableau périodique afin d'obtenir un polymère de diène conjugué ; et

la modification du polymère de diène conjugué avec un composé carbonyle,

[Formule chimique 1]

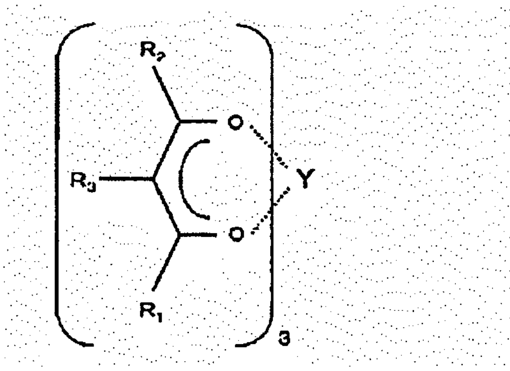

(1)

dans laquelle $R_1$, $R_2$ et $R_3$ représentent l'hydrogène ou un groupe hydrocarbure ayant 1 à 12 atomes de carbone, O représente un atome d'oxygène et Y représente un atome d'yttrium.

2. Polymère de diène conjugué modifié selon la revendication 1, dans lequel le composé carbonyle est au moins un composé choisi dans le groupe constitué de composés carbonyle ayant un groupe amino et de composés carbonyle ayant un groupe alcoxy.

3. Polymère de diène conjugué modifié selon la revendication 1 ou 2, dans lequel le composé carbonyle est une 4,4'-bisdialkylaminobenzophénone.

4. Polymère de diène conjugué modifié selon la revendication 1 ou 2, dans lequel le composé carbonyle est une 4,4'-dialcoxybenzophénone.

5. Polymère de diène conjugué modifié selon l'une quelconque des revendications 1 à 4, où lorsque le composé diène conjugué est polymérisé, la masse moléculaire est ajustée par un composé choisi dans le groupe constitué (1) d'hydrogène, (2) de composés hydrure métallique et (3) de composés hydrure organométallique.

6. Polymère de diène conjugué modifié selon l'une quelconque des revendications 1 à 5, le polymère de diène conjugué étant un polybutadiène ayant 99 % ou plus d'une structure cis-1,4.

7. Polymère de diène conjugué modifié selon l'une quelconque des revendications 1 à 6, le polymère de diène conjugué étant un cis-1,4-polybutadiène ayant un rapport de la masse moléculaire moyenne en poids (Mw) à la masse moléculaire moyenne en nombre (Mn) (Mw/Mn) égal ou supérieur à 1,5 et inférieur à 3.

8. Polymère de diène conjugué modifié selon l'une quelconque des revendications 1 à 7, le polymère de diène conjugué ayant un polybutadiène présentant un point de fusion (Tm) de -5 °C ou plus par analyse calorimétrique différentielle (DSC).

9. Composition de caoutchouc utilisant le polymère de diène conjugué modifié tel que défini dans l'une quelconque des revendications 1 à 8.

10. Composition de caoutchouc comprenant le polymère de diène conjugué modifié tel que défini dans l'une quelconque des revendications 1 à 8, un polymère de diène autre que le polymère de diène conjugué modifié et un agent de renforcement de caoutchouc.

11. Composition de caoutchouc selon la revendication 10, comprenant de la silice en tant qu'agent de renforcement de caoutchouc.

12. Procédé de production d'un polymère de diène conjugué comprenant :

la polymérisation d'un composé diène conjugué en utilisant un catalyseur comprenant (A) un composé d'yttrium ayant un ligand volumineux représenté par la formule générale (1) suivante, (B) un composé ionique formé d'un anion non coordinant et d'un cation, et (C) un composé organométallique formé d'un élément choisi dans

le groupe constitué du groupe 2, du groupe 12 et du groupe 13 du tableau périodique afin d'obtenir un polymère de diène conjugué ; et
la modification du polymère de diène conjugué avec un composé carbonyle,

[Formule chimique 2]

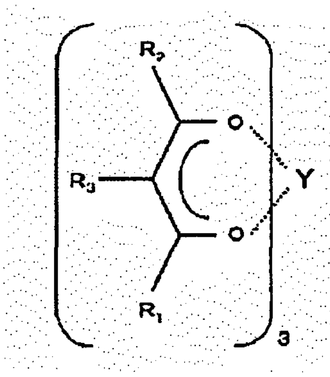

(1)

dans laquelle (1), $R_1$, $R_2$ et $R_3$ représentent l'hydrogène ou un groupe hydrocarbure ayant 1 à 12 atomes de carbone, O représente un atome d'oxygène et Y représente un atome d'yttrium.

**13.** Procédé de production d'un polymère de diène conjugué modifié selon la revendication 12, dans lequel le composé carbonyle est au moins un composé choisi dans le groupe constitué de composés carbonyle ayant un groupe amino et de composés carbonyle ayant un groupe alcoxy.

**14.** Procédé de production d'un polymère de diène conjugué modifié selon la revendication 12 ou 13, dans lequel le composé carbonyle est une 4,4'-bisdialkylaminobenzophénone.

**15.** Procédé de production d'un polymère de diène conjugué modifié selon la revendication 12 ou 13, dans lequel le composé carbonyle est une 4,4'-dialcoxybenzophénone.

**16.** Procédé de production d'un polymère de diène conjugué modifié selon l'une quelconque des revendications 12 à 15, où lorsque le composé diène conjugué est polymérisé, la masse moléculaire est ajustée par un composé choisi dans le groupe constitué (1) d'hydrogène, (2) de composés hydrure métallique et (3) de composés hydrure organométallique.

FIG. 1

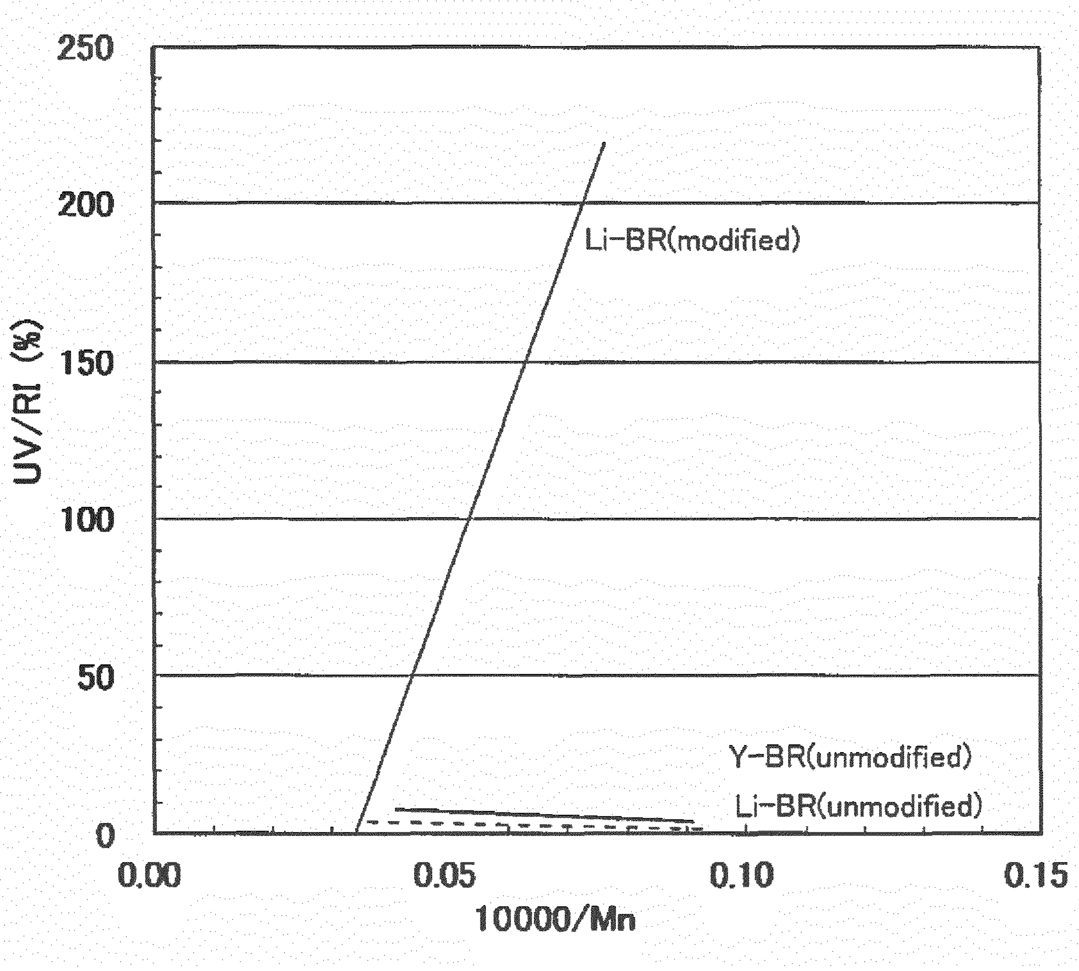
250
200
150
100
50
0
UV/RI (%)
0.00
0.05
0.10
0.15
10000/Mn
Li-BR(modified)
Y-BR(unmodified)
Li-BR(unmodified)

FIG. 2

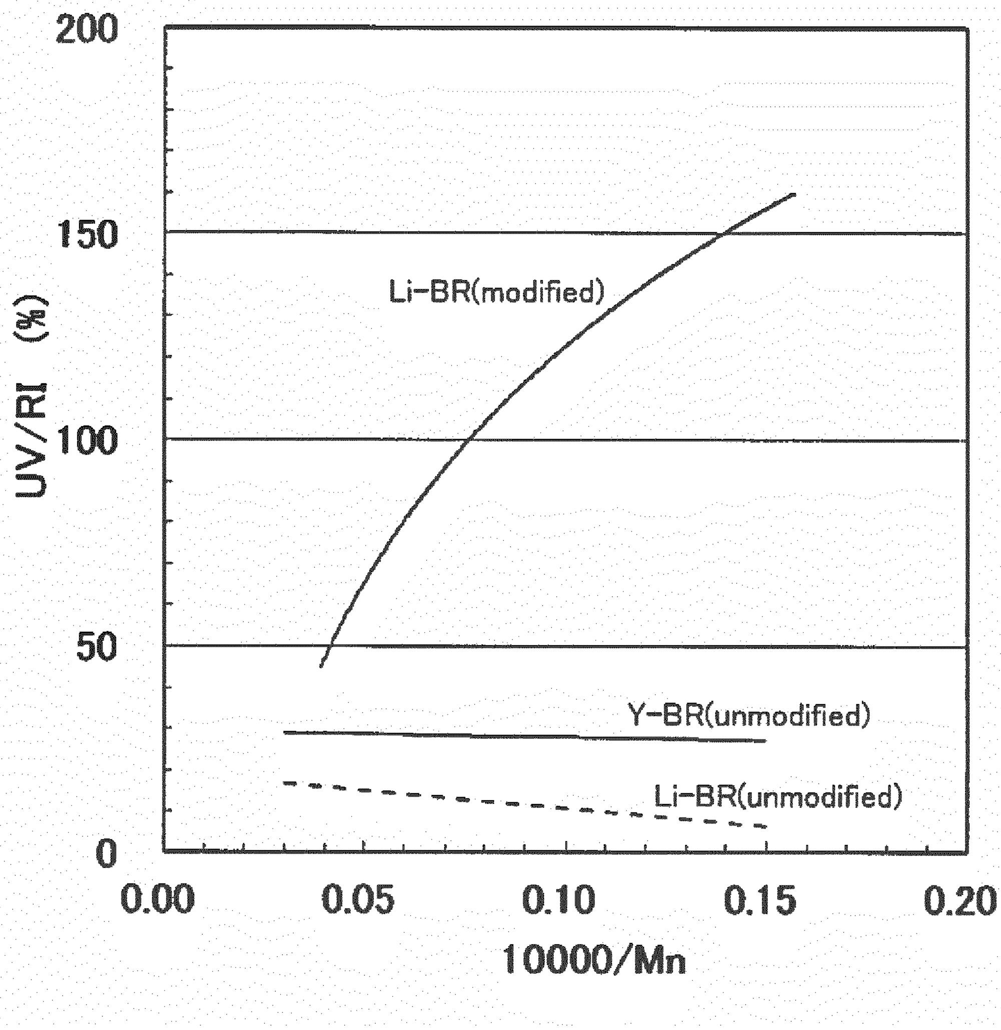
200
150
100
50
0
UV/RI (%)
Li-BR(modified)
Y-BR(unmodified)
Li-BR(unmodified)
0.00
0.05
0.10
0.15
0.20
10000/Mn

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58162604 A
- JP 59117514 A
- WO 2010074255 A
- JP 2001139633 A
- JP 2001139634 A
- JP 2002030110 A
- JP 2000086719 A